**Europäisches Patentamt**

**European Patent Office**

**Office européen des brevets**

(19)

(11) Veröffentlichungsnummer: **0 014 269**
**B1**

(12) # EUROPÄISCHE PATENTSCHRIFT

(45) Veröffentlichungstag der Patentschrift:
07.10.81

(51) Int. Cl.³: **F 16 K 1/22**, F 02 B 33/42

(21) Anmeldenummer: **79200688.4**

(22) Anmeldetag: **22.11.79**

(54) **Startventil, insbesondere für Dieselmotoren mit Druckwellenlader.**

(30) Priorität: **01.02.79 CH 964/79**

(43) Veröffentlichungstag der Anmeldung:
**20.08.80 Patentblatt 80/17**

(45) Bekanntmachung des Hinweises auf die Patenterteilung:
**07.10.81 Patentblatt 81/40**

(84) Benannte Vertragsstaaten:
**AT BE DE FR GB IT NL SE**

(56) Entgegenhaltungen:
**CH-A-247 062**
**FR-A-2 175 318**
**US-A-2 853 987**
**US-A-3 771 759**

(73) Patentinhaber: **BBC Brown, Boveri & Cie.**
**(Aktiengesellschaft), CH-5401 Baden (CH)**

(72) Erfinder: **Fried, Reinhard, Stockackerstrasse 1,**
**CH-5415 Nussbaumen/Schweiz (CH)**
Erfinder: **Mayer, Andreas, Dipl.-Ing.,**
**Fohrhölzlistrasse 14b, CH-5443 Niederrohrdorf/Schweiz**
**(CH)**
Erfinder: **Perego, Ambrogio, Rosenauweg 4,**
**CH-5430 Wettingen (CH)**

ACTORUM AG.

Startventil, insbesondere für Dieselmotoren
mit Druckwellenlader

Die vorliegende Erfindung betrifft ein Startventil, insbesondere für Dieselmotoren mit Druckwellenlader, nach dem Oberbegriff des Patentanspruchs 1.

Bekannte Startventile dieser Art weisen eine zwischen zwei Endstellungen schwenkbare Klappe auf, deren Welle gewöhnlich in Querlagern gelagert ist. Sie sind nicht spielfrei und es können daher aus der Ladeluftleitung Schmutzpartikel in die Lagerung gelangen und damit die Klappenbewegung blockieren. Gleiches gilt auch für eine kombinierte Quer- und Längslagerung. Infolgedessen erfordern solche Startventile eine besonders sorgfältige Wartung, da andernfalls die Betriebssicherheit gefährdet wäre.

Um bei den bekannten Bauarten solcher Startventile besagtes Spiel und die dadurch bedingten Undichtheiten zu vermeiden, müssten sehr enge Toleranzen eingehalten werden, was die Herstellung natürlich verteuert.

Aufgabe der im kennzeichnenden Teil des Patentanspruchs 1 definierten Erfindung ist es, diese Nachteile zu vermeiden. Ausserdem soll dieses Startventil einen einfachen Aufbau aufweisen, praktisch keine Wartung, d.h., regelmässige Schmierung, benötigen und auch bei höheren Temperaturen, bis zu 200 °C, verwendbar sein.

In der Zeichnung ist ein Ausführungsbeispiel des Erfindungsgegenstandes dargestellt, das im folgenden beschrieben wird. Es stellen dar:

Fig. 1 einen Querschnitt durch das Startventil im Aufriss,

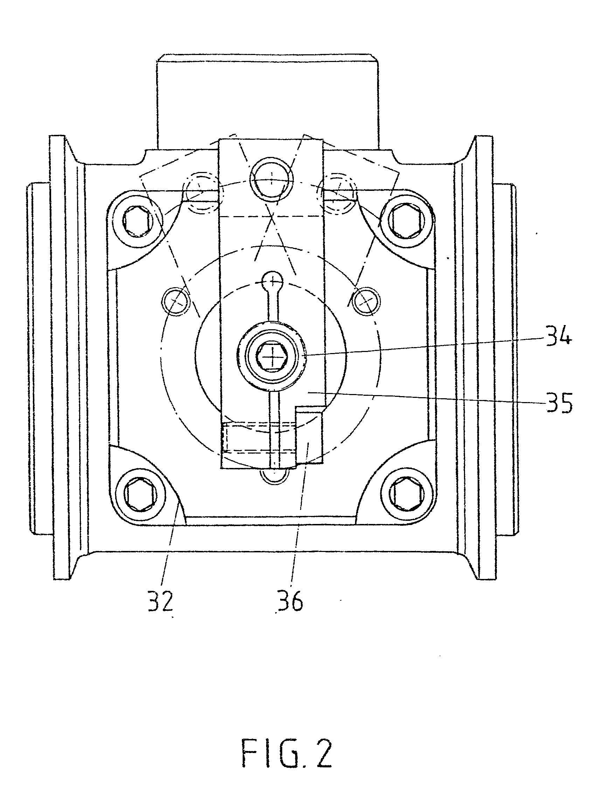

Fig. 2 eine Seitenansicht des Startventils,

Fig. 3 die Ansicht nach Fig. 2, teilweise geschnitten, und

Fig. 4 eine Draufsicht des Startventils.

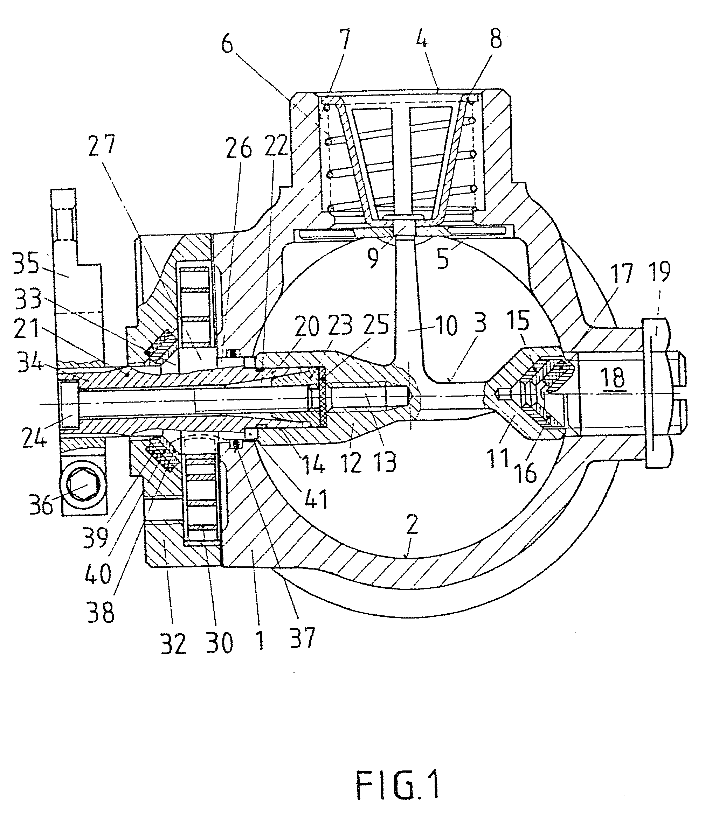

In Fig. 1 bedeutet 1 das aus einem Stück bestehenden Gehäuse des Ventils und 2 den Ausgangskanal, in dem die Startklappe 3 mit einer quer zur Durchströmrichtung des Ausgangskanals 2 liegenden Drehachse schwenkbar gelagert ist.

An der Oberseite des Gehäuses 1 befindet sich ein Schnüffelventil 4, durch das der Motor in der Startphase bei geschlossener Startklappe unter Umgehung des Druckwellenladers Luft direkt aus dem Freien ansaugen kann, bis sich vor der geschlossenen Startklappe ein ausreichend hoher Druck gebildet hat, um diese zu öffnen und auf Laderbetrieb überzugehen, während dem das Schnüffelventil 4 dann geschlossen bleiben muss.

Das Schnüffelventil besteht aus einem Ventilteller 5, einer Feder 6, die sich auf dem Grund einer Bohrung 7 des Gehäuses abstützt, und einem Federkorb 8, der die obere Abstützung der Feder bildet und dessen unteres Ende mit dem Ventilteller 5 mittels einer Niete 9 verbunden ist.

Der Ventilteller ist zumindest im Bereich seiner Sitzfläche mit Teflon (PTFE) beschichtet, wodurch Ankleben oder Anfrieren und Korrosion verhindert werden, ebenso das störende metallische Klappern. Der Federkorb 8 verjüngt sich nach unten und bietet damit auch bei durch den Luftstrom verursachter schräger Stellung genügend Freigängigkeit für die Feder, so dass unter allen Umständen ein sicheres Schliessen des Ventiltellers 5 gewährleistet ist.

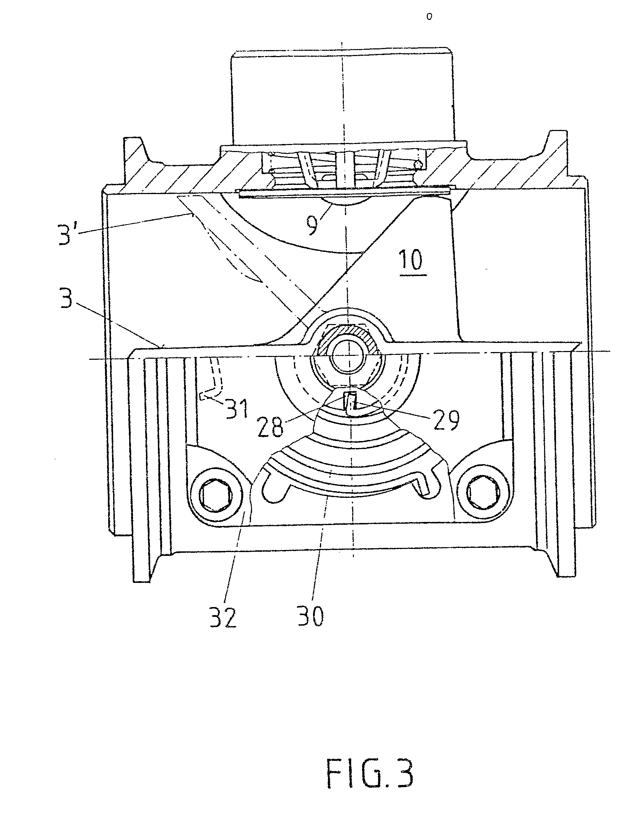

Die Startklappe 3 ist in den Fig. 1 und 3 in ihrer waagrechten, offenen Stellung gezeigt. In Fig. 3 ist nur die obere Gehäusehälfte im Schnitt dargestellt und die Klappe daher auch nur zur Hälfte sichtbar.

Der Schwenkwinkel der Klappe 3 zwischen der offenen und der in Fig. 3 strichpunktiert, gezeichneten, geschlossenen Stellung 3' beträgt etwa 45°.

Die Klappe 3 weist an ihrer Oberseite eine Anschlagnase 10 auf, die in der geöffneten Stellung der Startklappe, Fig. 1 und Fig. 3, den Ventilteller 5 auf seinen Sitz presst und damit ein Öffnen des Schnüffelventils und ein Ansaugen von Luft durch dasselbe verhindert. Gleichzeitig dient die Nase 10 aber auch als Anschlag für die offene Stellung der Startklappe.

Die Startklappe 3 weist an den beiden Enden ihrer Drehachse Butzen 11, 12 auf, von denen der mit 11 bezeichnete ein Konuslager aufnimmt, während der zweite Butzen 12 eine Gewindebohrung 13 und einen Innensechskant 14 aufweist. Die Gewindebohrung 13 ist für den Fall vorgesehen, dass eine andere als unten beschriebene Art der formschlüssigen Verbindung von Startklappe und Klappenwelle vorgesehen wird.

Das Konuslager besteht aus einer konischen Bohrung, in der sich zwei konische, «teflonierte» (PTFE-beschichtete) Mehrstofflagerschalen 15, 16 befinden, die vorzugsweise aus Stahlblech und Sinterbronze oder aus einer anderen geeigneten Kombination bestehen. Auf diese stützt sich eine konische Gummischale 17 ab, die in eine Eindrehung einer Lagerstellschraube 18 mit Kegelspitze und Schraubenschlitz eingelegt ist, die in einem Gewinde des Gehäuses 1 verschraubbar und mittels einer Blechsicherungsmutter 19 gesichert ist.

Der Innensechskant 14 nimmt einen Sechskant 20 einer Klappenwelle 21 auf. Diese Welle ist hohl und an ihrem Sechskantende mit einem Innenkonus 22 versehen, in dem sich ein Spreizkegel 23 mit Innengewinde befindet, der durch Verspannen mittels einer Innensechskantschraube 24 den Sechskant der Klappenwelle 21 im Innensechskant 14 verspannt.

Im Grunde des Innensechskants 14 liegt eine Gummischeibe 25, durch die die Lage des Spreizkegels 23 im Innensechskant 14 bestimmt wird.

An den Sechskant 20 der Klappenwelle 21 schliesst sich ein zylindrischer Zapfen 26 an, der in einen zylindrischen Absatz 27 übergeht. In diesem befindet sich, wie aus Fig. 3 hervorgeht, eine Nut 28 zur Verankerung des inneren Endes 29 einer als Rückstellfeder für die Klappe dienenden Spiralblattfeder 30, deren äusseres Ende 31 in einem Lagerdeckel 32 fixiert ist.

Die Klappenwelle 21 setzt sich nach dem zylindrischen Absatz 27 in einem kegeligen Lagerzapfen 33 und einem anschliessenden zylindrischen Wellenteil 34 mit Vielzahnprofil nach aussen fort. Auf letzterem sitzt der im Nabenbereich geschlitzte Klappenhebel 35, der mit einer Klemmschraube 36 auf der Welle festgespannt ist.

Zur Abdichtung des Ausgangkanals 2 gegen die Federkammer im Lagerdeckel 32 dient ein Rundschnurring 37 im Gehäuse 1.

Auf dem kegeligen Lagerzapfen 33 sitzen zwei konische, «teflonisierte» Mehrstofflagerschalen 38 und 40 und im Lagerdeckel 32 eine konische Gummischale 39.

Die für diese Startklappe verwendete Lagerung mit den beidseitig vorgesehenen konischen Gummischalen 17, 39 erlaubt mit Hilfe der Lagerstellschraube 18 und entsprechender Wahl der Stärke der Gummischeibe 25 eine vollkommen spielfreie Einstellung, sowohl axial als auch radial, mit Vorspannung, wodurch eine eventuelle Abnützung im Betrieb bis zu einer gewissen Grösse von selbst ausgeglichen wird. Die Lagerung mit den «teflonisierten» Lagerschalen ist ausserordentlich leichtgängig, und zwar auch ohne Schmierung und bei Temperaturen bis zu 200°C. Die Elastizität dieser Lagerpaarung gleicht auch herstellungsbedingte Konizitätsfehler aus. Sie wirkt auch schwingungsdämpfend.

Um einen infolge Herstellungsfehlern erforderlichen Toleranzausgleich der Kette: Gehäuse-Lagerdeckel-Gummischale-Mehrstofflagerschalen-Klappenwelle-Klappe zu ermöglichen, ist der Sechskant 20 länger als der Innensechskant 14, so dass zwischen dem zylindrischen Zapfen 26 und der Strinfläche des Butzens 12 ein Axialspiel 41 vorhanden ist, dessen Grösse durch die Stärke der Gummischeibe 25 bestimmt ist. Durch deren Stärke lässt sich auch die Vorspannung der Gummischale 39 im Lagerdeckel 32 und damit die Lagerreibung beeinflussen. Auf diese Weise erspart man sich eine enge Tolerierung der Teile und damit eine teurere Fertigung.

Das Gehäuse 1 ist zur Klappenachse symmetrisch ausgebildet und ist daher für beide Anbaulagen verwendbar.

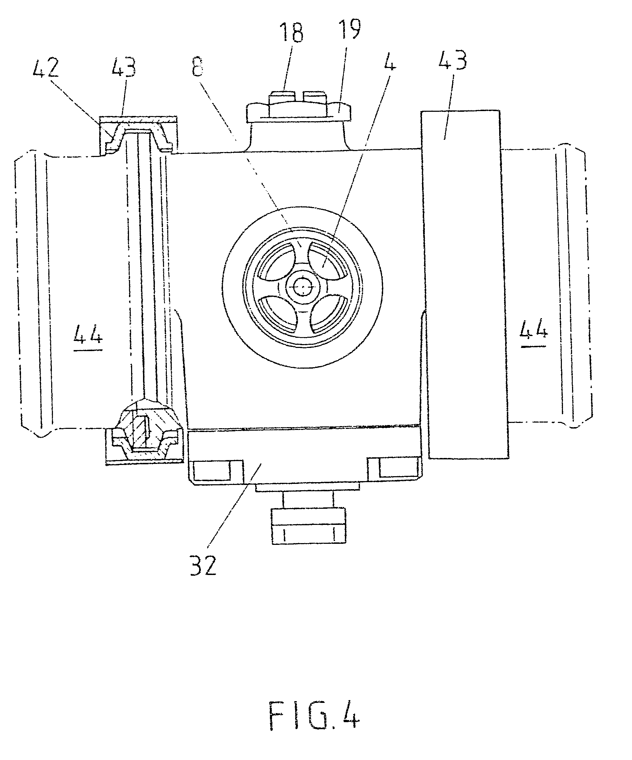

Die Verbindung der Ansaugrohrteile vor und hinter dem Startventil kann beispielsweise, wie in Fig. 4 dargestellt, mit V-Bändern 42 und Spannschellen 43 geschehen. Die in Fig. 4 strichpunktiert gezeigten Rohrstutzen 44 sind für den Anschluss von Schläuchen vorgesehen.

Die als Anschlag für die Startklappe und zur Verriegelung des Schnüffelventils dienende Anschlagnase kann auch mit zwei Höckern ausgeführt werden, wobei der eine zur Anlage an die Rohrinnenwand bestimmt ist und als Schwenkbegrenzung für die geöffnete Stellung der Startklappe 3 dient, während der zweite für die Verriegelung des Schnüffelventils sorgt, indem er bei offener Stellung der Startklappe etwa im Zentrum des Ventiltellers 5 federnd angreift und diesen, um eine Verformung des Tellers auszuschliessen, verhältnismässig sanft auf seinen Sitz drückt.

Bezeichnungsliste

 1  Gehäuse
 2  Ansaugkanal
 3  Startklappe
 4  Schnüffelventil
 5  Ventilteller
 6  Feder
 7  Bohrung
 8  Federkorb
 9  Niete
10  Anschlagnase der Startklappe
11  Butzen
12  Butzen
13  Gewindebohrung
14  Innensechskant
15  konische teflonisierte Mehrstofflagerschale
16  konische teflonisierte Mehrstofflagerschale
17  konische Gummischale
18  Lagerstellschraube
19  Blechsicherungsmutter
20  Sechskant
21  Klappenwelle
22  Innenkonus
23  Spreizkegel
24  Innensechskantschraube
25  Gummischeibe
26  zylindrischer Zapfen der Klappenwelle
27  zylindrischer Absatz der Klappenwelle
28  Nut
29  inneres Ende der Feder 30
30  Spiralblattfeder
31  äusseres Ende der Feder 30
32  Lagerdeckel
33  kegeliger Lagerzapfen
34  Wellenteil mit Vielzahnprofil
35  Klappenhebel
36  Klemmschraube
37  Rundschnurring
38  konische, teflonisierte Mehrstofflagerschale
39  konische Gummischale
40  konische, teflonisierte Mehrstofflagerschale
41  Axialspiel
42  V-Bänder
43  Spannschellen
44  Rohrstutzen

**Patentansprüche**

1. Startventil, insbesondere für Dieselmotoren mit Druckwellenlader, mit einer in einem Gehäuse (1) zwischen einer offenen und einer geschlossenen Stellung schwenkbaren Startklappe (3), einem im Gehäuse (1) vorgesehenen, federbelasteten Schnüffelventil (4), sowie mit einer auf die Klappenwelle (21) wirkenden Rückstellfeder (30), dadurch gekennzeichnet, dass zur Lagerung der Startklappe (3) an dieser zwei Butzen (11, 12) vorgesehen sind, dass der eine Butzen (11) federnd belastete konische Lagerelemente (15, 16, 17) enthält, dass im Gehäuse (1) eine mit diesen Lagerelementen zusammenwirkende Lagerstellschraube (18) mit Kegelspitze verschraubbar ist, dass der zweite Butzen (12) formschlüssig eine Klappenwelle (21) aufnimmt, die einen kegeligen Lagerzapfen (33) aufweist, und dass in einem Lagerdeckel (32) mit dem kegeligen Lagerzapfen (33) zusammenwirkende, federnd belastete Lagerelemente (38, 39, 40) vorgesehen sind.

2. Startventil nach Anspruch 1, dadurch gekennzeichnet, dass die konischen Lagerelemente (15, 16, 17 bzw. 38, 39, 40) aus je zwei konischen PTFE-beschichteten Mehrstofflagerschalen (15, 16; 38, 40) und je einer konischen Gummischale (17; 39) zur Erzeugung der federnden Vorspannung der konischen Lagerelemente bestehen.

3. Startventil nach Anspruch 2, dadurch gekennzeichnet, dass die konischen Gummischalen (17; 39) in einer Eindrehung der Lagerstellschraube (18) bzw. des Lagerdeckels (32) vorgesehen sind.

4. Startventil nach Anspruch 3, dadurch gekennzeichnet, dass die konischen, PTFE-beschichteten Mehrstofflagerschalen (15, 16; 38, 40) in einem konischen Bohrungsteil des Butzens (11) bzw. auf dem kegeligen Lagerzapfen (33) der Klappenwelle (21) vorgesehen sind.

5. Startventil nach Anspruch 1, dadurch gekennzeichnet, dass für die formschlüssige Verbindung der Startklappe (3) mit der Klappenwelle (21) im Butzen (12) ein Innensechskant (14) vorgesehen ist, der einen Abschnitt der Klappenwelle mit einem entsprechenden Sechskant (20) aufnimmt, dass die Klappenwelle im Bereich des Sechskantabschnittes einen Innenkonus (22) aufweist, der einen Spreizkegel (23) mit Innengewinde aufnimmt, und dass eine im Spreizkegel (23) verschraubbare Innensechskantschraube (24) zum Verspannen des Sechskantabschnittes der Klappenwelle im Butzen (12) der Startklappe vorgesehen ist.

6. Startventil nach Anspruch 5, dadurch gekennzeichnet, dass zwischen dem Grund des Innensechskants (14) und der Stirnfläche des Spreizkegels (23) eine Gummischeibe (25) zum Ausgleich von Toleranzen und zur Einstellung der axialen Vorspannung der Lagerung durch die konische Gummischale (39) vorgesehen ist.

7. Startventil nach Anspruch 1, dadurch gekennzeichnet, dass die Startklappe (3) eine als Anschlag für ihre offene Stellung und als Verriegelung für das Schnüffelventil (4) dienende Anschlagnase (10) aufweist.

## Claims

1. Starting valve unit, in particular for diesel engines with a pressure-wave supercharger, having a starting valve (3) which can be pivoted, in a housing (1), between an open and a closed position, a spring-loaded blow-valve (4), provided in the housing (1), and a return spring (30), acting on the valve-shaft (21), characterised in that bushes (11, 12) are provided on the starting valve (3) for the purpose of mounting the said valve (3), in that one bush (11) contains resiliently loaded conical bearing elements (15, 16, 17), in that a screw (18) for adjusting the bearing can be secured, by screwing, in the housing (1), this screw having a conical tip and interacting with the said bearing elements, in that the second bush (12) receives a valve-shaft (21), with positive engagement, the said shaft possessing a conical journal (33), and in that resiliently loaded bearing elements (38, 39, 40) are provided in a bearing cover (32), these bearing elements (38, 39, 40) interacting with the conical journal (33).

2. Starting valve unit according to claim 1, characterised in that the conical bearing elements (15, 16, 17 and 38, 39, 40) consist, in each case, of two conical PTFE-coated compound-bearing linings (15, 16; 38, 40) and, in each case, of one conical rubber lining (17; 39), for the purpose of generating the resilient preloading of the conical bearing elements.

3. Starting valve unit according to claim 2, characterised in that the conical rubber linings (17; 39) are provided in a recess machined in the screw (18) for adjusting the bearing, or in a recess machined in the bearing cover (32).

4. Starting valve unit according to claim 3, characterised in that the conical, PTFE-coated compound-bearing linings (15, 16; 38, 40) are provided in a conical bore-section of the bush (11), and on the conical journals (33) of the valve-shaft (21).

5. Starting valve unit according to claim 1, characterised in that a hexagon socket (14) is provided for the positive connection of the starting valve (3) to the valve-shaft (21) in the bush (12), this socket receiving a section of the valve-shaft having a corresponding hexagon (20), in that the valve-shaft possesses an internal cone (22) in the region of the hexagon section, this international cone receiving an expanding cone (23) having an internal thread, and in that a hexagon socket screw (24), which can be secured, by screwing, in the expanding cone (23), is provided for the purpose of clamping the hexagon section of the valve-shaft in the bush (12) of the starting valve.

6. Starting valve unit according to claim 5, characterised in that a rubber disc (25) is provided, between the base of the hexagon socket (14) and the endface of the expanding cone (23), for the purpose of compensating tolerances, and for the purpose of adjusting the axial preloading of the bearing piston by means of the conical rubber lining (39).

7. Starting valve unit according to claim 1, characterised in that the starting valve (3) possesses a stop-nose (10), which serves as a stop for the open position of the starting valve, and as a loking device for the blow-valve (4).

## Revendications

1. Valve de démarrage, en particulier pour moteurs diesel à compresseur de suralimentation à ondes de pression, comportant un volet de démarrage (3) pouvant pivoter dans un boîtier (1) entre une position d'ouverture et une position de fermeture, une soupape de reniflement (4) à ressort prévue dans le boîtier (1) ainsi qu'un ressort de rappel (30) agissant sur l'arbre (21) du volet, caractérisée en ce que pour le montage à pivot du volet de démarrage (3), deux douilles (11, 12) y sont associées, la première douille (11) comporte des coussinets coniques sollicités par ressort (15, 16, 17), une vis de réglage de palier (18) à pointe conique coopérant avec ces coussinets peut être vissée dans le boîtier (1), la deuxième douille (12) reçoit positivement un arbre de volet (21) qui présente un tourillon conique (33), et des coussinets (38, 39, 40) sollicités par ressort et coopérant avec le tourillon conique (33) sont prévus dans un couvercle de palier (32).

2. Valve de démarrage suivant la revendication 1, caractérisée en ce que les éléments de palier coniques (15, 16, 17, 38, 39, 40) sont formés chacun de deux coussinets multicouches coniques recouverts de PTFE (15, 16; 38, 40) et d'un coussinet conique en caoutchouc (17, 39) pour produire la précontrainte élastique des éléments de palier coniques.

3. Valve de démarrage suivant la revendication 2, caractérisée en ce que les coussinets coniques en caoutchouc (17, 39) sont prévus dans un évidement de la vis de réglage de palier (18) ou du couvercle de palier (32).

4. Valve de démarrage suivant la revendication 3 caractérisée en ce que les coussinets multicouches coniques recouverts de PTFE (15, 16; 38, 40) sont prévus dans une partie d'alésage conique de la douille (11) ou sur le tourillon conique (33) de l'arbre de volet (21).

5. Valve de démarrage suivant la revendication 1, caractérisée en ce qu'un alésage hexagonal (14) est prévu dans la douille (12) pour relier positivement le volet de démarrage (3) à l'arbre de volet (21) et reçoit une partie hexagonale correspondante (20) de l'arbre de volet, l'arbre de volet présente, dans la zone de la partie hexagonale, un cône intérieur (22) qui reçoit un cône expansible (23) taraudé et une vis (24) pour l'alésage hexagonal pouvant être vissée dans le cône expansible (23) est prévu pour précontraindre la partie hexagonale de l'arbre de volet dans la douille (12) du volet de démarrage.

6. Valve de démarrage suivant la revendication 5, caractérisée en ce qu'entre le fond de l'alésage hexagonal (14) et la face d'about du cône expansible (23) est prévue une rondelle de caoutchouc (25) destinée à compenser les tolérances et à régler la précontrainte axiale du palier formé par le coussinet conique en caoutchouc (39).

7. Valve de démarrage suivant la revendication 1, caractérisée en ce que le volet de démarrage (3) présente une saillie de butée servant de butée pour sa position d'ouverture et de verrouillage pour la valve de reniflement (4).

# FIG.1

FIG. 2

FIG.3

FIG.4